# EUROPEAN PATENT SPECIFICATION

(11) **EP 1 783 523 B1**
(45) Date of publication and mention of the grant of the patent: **26.05.2010**
(21) Application number: 05023939.1
(22) Date of filing: 03.11.2005
(51) Int. Cl.: G02B 6/38

(54) **Optical fibre alignment apparatus**
Ausrichtvorrichtung für optische Fasern
Dispositif d'alignement de fibres optiques

(43) Date of publication of application: 09.05.2007
(73) Proprietor: Ridgemount Technologies Limited, Launton Bicester Oxfordshire OX26 5EL (GB)
(72) Inventor: Peters, Christopher Russell c/o Ridgemount, Long Crendon HP18 9BB (GB); Limbert, Mark John c/o Ridgemount Technologies, Long Crendon HP18 9BB (GB)
(74) Representative: Molony, Anna

(56) References cited:
- US-A- 5 253 316
- US-A- 6 030 129
- US-A1- 2004 165 833
- US-A1- 2004 264 877
- PATENT ABSTRACTS OF JAPAN vol. 005, no. 138 (P-078), 2 September 1981 (1981-09-02) -& JP 56 074211 A (OKI ELECTRIC IND CO LTD), 19 June 1981 (1981-06-19)

## Description

The invention relates to optical fibre alignment apparatus.

Existing optical connectors are generally quite bulky compared to the dimensions of the optical fibres which they are used with. This is at least partly due to their incorporating bulk optic coupling lenses in front of the optical fibres, for coupling optical signals into the optical fibres. US 2004/01655833, JP 56074211, US 5253316 and 6030129 disclose optical connectors in which optical fibres to be connected are held in ferrules and direct coupling of the fibres is provided by mechanically coupling the ends of the ferrules.

According to a first aspect of the invention there is provided optical fibre alignment apparatus comprising:
a plurality of alignment ferrules for holding a corresponding plurality of optical fibres to be aligned;
a plurality of asymmetric key collars respectively provided around each alignment ferrule, each asymmetric key collar comprising a cylindrical collar of generally circular cross-section, a segment being removed from each of three quadrants of the collar, to thereby form a key member having three flat key faces and one curved, part-cylindrical key face; and
a ferrule mounting member, characterised in that a substantially square or rectangular shaped key socket is provided in the ferrule mounting member to receive and mate with the plurality of key collars such that at least one flat key face on each key collar mates with a side of the key socket and the ferrules are thereby held securely within the ferrule mounting member,
whereby each optical fibre held within a respective alignment ferrule mounted on the ferrule mounting member is aligned in a pre-determined axial orientation.

The optical fibre alignment apparatus preferably further comprises a ferrule holder in which the optical fibre insertion end of the alignment ferrule is received, the asymmetric key collar being provided around the ferrule holder. The ferrule holder is preferably substantially cylindrical in shape.

Embodiments of the invention will now be described, by way of example only, with reference to the accompanying drawings, in which:
Figure 1 is a diagrammatic part-exploded view of optical fibre alignment apparatus according to a first embodiment of the invention;
Figure 2 is a diagrammatic view of an alignment ferrule and key member of the apparatus of Figure 1;
Figure 3 is an end view in direction A of the alignment ferrule, ferrule holder and key member of Figure 2;
Figure 4 is a side view of the apparatus of Figure 1;
Figure 5 is an end view in direction B of the apparatus of Figure 4;
Figure 6 is a cross-sectional view along line C-C of the apparatus of Figure 5: and
Figure 7 is a diagrammatic representation of the ferrule mounting block, ferrule holders and key collars of optical fibre alignment apparatus according to a second embodiment of the invention.

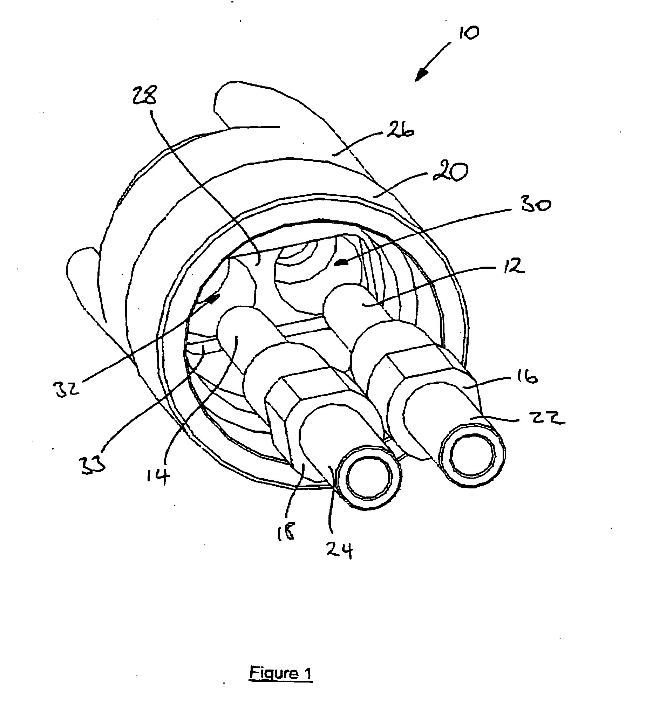

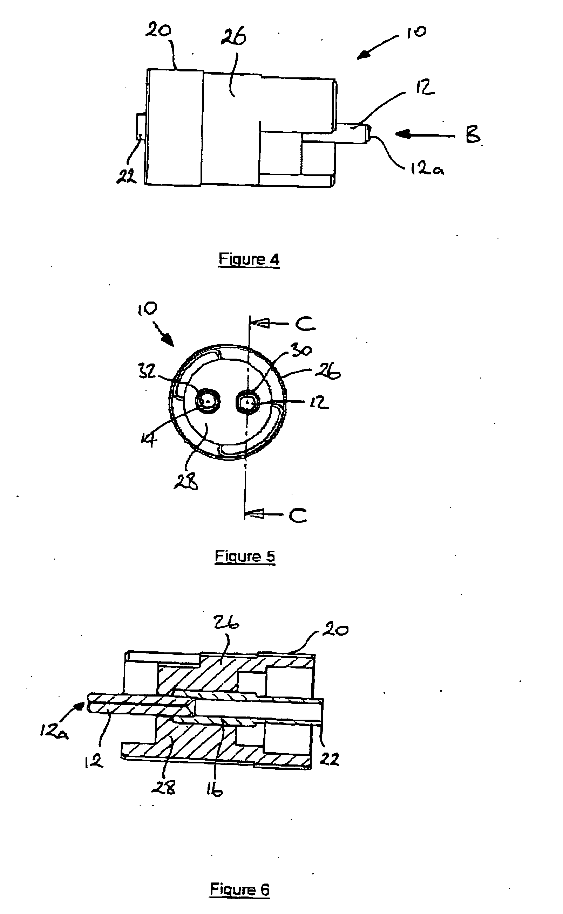

Referring to Figures 1 to 6, a first embodiment of the invention provides optical fibre alignment apparatus 10 comprising first and second alignment ferrules 12, 14, uni-orientational key members in the form of asymmetric key collars 16, 18, and a ferrule mounting member 20.

The alignment ferrules 12, 14 are circular cylindrical ceramic ferrules formed with angle polished end faces 12a, according to IEC standard specification ?? for optical fibre ferrules.

The asymmetric key collars 16, 18 are provided on tubular ferrule holders 22, 24, in which the optical fibre insertion ends of the ferrules 12, 14 are received. The key collars 16, 18 encircle the respective ferrule holders 22, 24 and thus the alignment ferrules 12, 14.

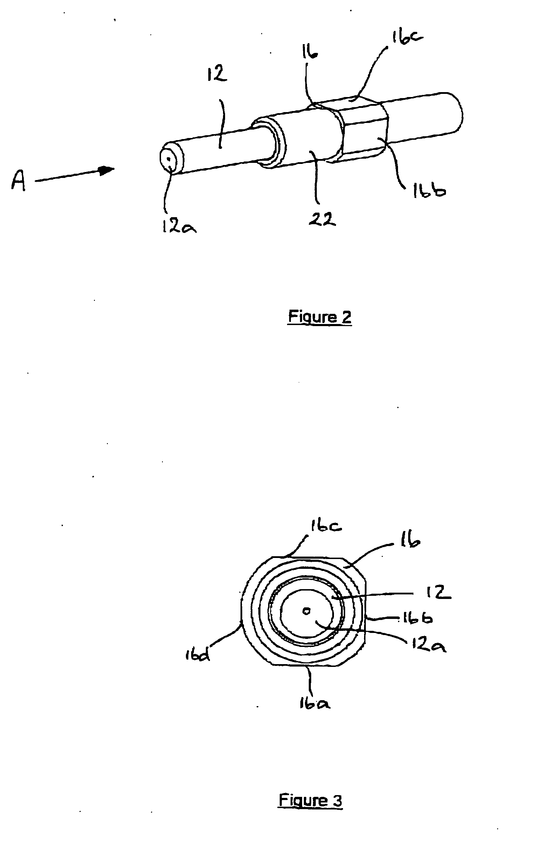

The key collars 16, 18 are generally circular in cross-section, with segments removed from each of three of the quadrants of the collars to give the key collars 16, 18 three flat key faces 16a, 16b, 16c (as shown in Figures 2 and 3) and one curved key face 16d. The three flat key faces 16a, 16b, 16c form part of each of three sides of a square; key faces 16a and 16c being generally parallel with one another, and key face 16b being generally perpendicular to them.

The ferrule mounting member 20 comprises a generally cylindrical housing 26 and a ferrule mounting block 28 which extends internally across the housing 26. First and second ferrule holder sockets 30, 32 of a complementary size and shape to the first and second ferrule holders 22, 24 are provided through the ferrule mounting block 28. A rectangular key socket 33 is provided on one side of the ferrule mounting block 28. The key socket 33 comprises a recess formed in the ferrule mounting block 28 and encompasses the ferrule holder sockets 30, 32.

In use, first and second optical fibres (not shown) are held within the first and second alignment ferrules 12, 14 which are mounted, in their respective ferrule holders 22, 24. The alignment ferrules 12, 14 are located through the ferrule holder sockets 30, 32 until the ferrule holders 22, 24 are received in their sockets 30, 32 and the key collars 16, 18 are located in the key socket 33. The key collars 16, 18, are orientated such that they located in the key socket 33 with their two opposing flat key faces 16a, 16c and 18a, 18c mated with the two long sides of the key socket 33. The alignment ferrules 12, 14 are thereby mounted in the ferrule mounting block 28 of the ferrule mounting member 20, and the first and second optical fibres are aligned in a pre-determined axial orientation.

A second embodiment of the invention provides optical fibre alignment apparatus for ten optical fibres. The optical fibre alignment apparatus of this embodiment is substantially the same is the apparatus 10 of the first embodiment, with the following modifications. The same reference numbers are retained for corresponding features.

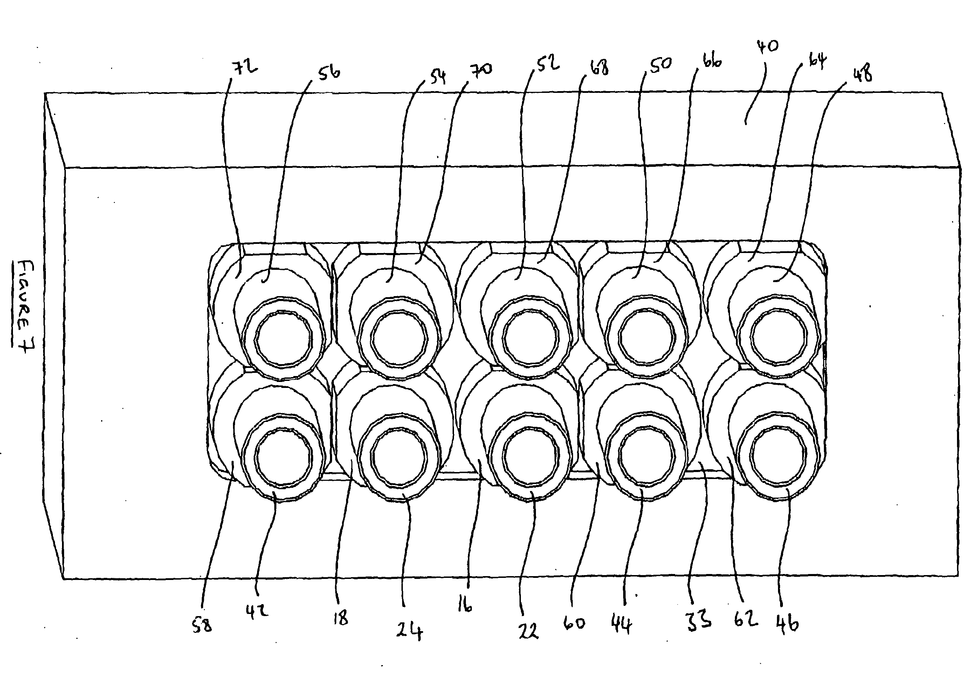

As shown in Figure 7, the ferrule mounting block 40 of the optical fibre alignment apparatus of this embodiment receives ten alignment ferrules (not visible in the Figure), each mounted within a respective ferrule holder 22, 24, 42, 44, 46, 48, 50, 52, 54, 56 and each provided with a respective asymmetric key collar 16, 18, 58, 60, 62, 64, 66, 68, 70, 72.

The ferrule mounting block 40 has ten ferrule holder sockets (not visible in the drawing) provided through it and a rectangular key socket 33 provided on one face of the ferrule mounting block 40. The key socket 33 comprises a rectangular recess of a size to receive all ten key collars 16, 18, 58-72 which are orientated such that each key collar 16, 18, 58-72 has one flat key face mated with a side of the key socket 33. The key collars 16, 18, 58-72 also mate with their neighbouring key collars 16, 18, 58-72, so that all of the alignment ferrules are held securely within the ferrule mounting block 40.

Various modifications may be made to the described embodiment without departing from the scope of the present invention. For example, the optical fibre alignment apparatus may comprise a different number of alignment ferrules, ferrule holders and key collars, for aligning a different number of optical fibres. The key collar may be of a different shape and asymmetric configuration to that shown. The key socket may be of a different shape and size to those shown, and may for example be substantially square.

The described embodiments provide various advantages, as follows. The key collars are very compact, resulting in the optical fibre alignment apparatus being significantly smaller than existing devices for aligning an equivalent number of optical fibres. In addition, a larger number of optical fibres can be aligned simultaneously using a single optical fibre alignment apparatus than is possible for existing devices of the same size.

The optical fibre alignment apparatus can be assembled and unassembled 'on-site' with basic tools and does not require specialist factory facilities. This is attractive for field deploy ability and use in remote locations.

## Claims

1. Optical fibre alignment apparatus (10) comprising:
a plurality of alignment ferrules (12, 14) for holding a corresponding plurality of optical fibres to be aligned;
a plurality of asymmetric key collars (16, 18, 58, 60, 62, 64, 66, 68, 70, 72) respectively provided around each alignment ferrule, each asymmetric key collar comprising a cylindrical collar of generally circular cross-section, a segment being removed from each of three quadrants of the collar, to thereby form a key member having three flat key faces (16a, 16b, 16c) and one curved, part-cylindrical key face (16d); and
a ferrule mounting member (28, 40), **characterised in that** a substantially square or rectangular shaped key socket (33) is provided in the ferrule mounting member to receive and mate with the plurality of key collars such that at least one flat key face on each key collar mates with a side of the key socket and the ferrules are thereby held securely within the ferrule mounting member,
whereby each optical fibre held within a respective alignment ferrule mounted on the ferrule mounting member is aligned in a pre-determined axial orientation.

2. Optical fibre alignment apparatus as claimed in claim 1, wherein the optical fibre alignment apparatus further comprises a ferrule holder (22, 24, 42, 44, 46, 48, 50, 52, 54, 56) in which the optical fibre insertion end of the alignment ferrule is received, the asymmetric key collar being provided around the ferrule holder.

## Patentansprüche

1. Vorrichtung (10) zum Ausrichten von optischen Fasern, die Folgendes umfasst:
eine Mehrzahl von Ausrichtsteckteilen (12, 14) zum Halten einer entsprechenden Mehrzahl von auszurichtenden optischen Fasern;
eine Mehrzahl von asymmetrischen Schließkeilen (16, 18, 58, 60, 62, 64, 66, 68, 70, 72), die jeweils um jeden Ausrichtsteckteil herum vorgesehen sind, wobei jeder asymmetrische Schließkeil einen zylindrischen Bund mit einem allgemein kreisförmigen Querschnitt umfasst, wobei ein Segment von jedem von drei Quadranten des Bundes entfernt ist, um **dadurch** ein Keilelement mit drei flachen Keilflächen (16a, 16b, 16c) und einer gekrümmten teilzylindrischen Keilfläche (16d) zu bilden; und
ein Steckteilmontageelement (28, 40), **dadurch gekennzeichnet, dass** eine im Wesentlichen quadratische oder rechteckige Keilfassung (33) in dem Steckteilmontageelement vorgesehen ist, um die mehreren Schließkeile aufzunehmen und damit zusammengesteckt zu werden, so dass wenigstens eine flache Keilfläche an jedem Schließkeil mit einer Seite der Keilfassung zusammengesteckt wird und die Steckteile **dadurch** fest in dem Steckteilmontageelement gehalten werden,
so dass jede in einem jeweiligen, an dem Steckteilmontageelement montierte Ausrichtsteckteil gehaltene optische Faser in einer vorbestimmten axialen Orientierung gehalten wird.

2. Vorrichtung zum Ausrichten von optischen Fasern nach Anspruch 1, wobei die Vorrichtung zum Ausrichten von optischen Fasern ferner einen Steckteilhalter (22, 24, 42, 44, 46, 48, 50, 52, 54, 56) umfasst, in dem das Optofasereinführungsende des Ausrichtsteckteils aufgenommen wird, wobei der asymmetrische Schließkeil um den Steckteilhalter herum vorgesehen ist.

## Revendications

1. Appareil d'alignement de fibres optiques (10) comprenant :
une pluralité de viroles d'alignement (12,14) permettant de retenir une pluralité correspondante de fibres optiques à aligner ;
une pluralité de coins de serrage asymétriques (16, 18, 58, 60, 62, 64, 66, 68, 70, 72) respectivement prévus à cet effet autour de chaque virole d'alignement, chaque coin de serrage asymétrique comprenant un collier de serrage cylindrique de section transversale généralement circulaire, un segment étant retiré de chacun des trois quadrants du collier de serrage, pour ainsi constituer un élément de coin présentant trois faces de coin plates (16a, 16b, 16c) et une face de coin incurvée, partiellement cylindrique (16d); et
un élément de montage à virole (28, 40), **caractérisé en ce qu'**une douille à coin sensiblement carrée ou rectangulaire (33) est disposée dans l'élément de montage de virole pour recevoir et s'engrener avec la pluralité de coins de serrage de telle sorte qu'au moins une face de coin plate sur laquelle chaque coin de serrage s'engrène avec un côté de la douille à coin et que les viroles soient ainsi maintenues solidement dans l'élément de montage de virole,
dans lequel chaque fibre optique maintenue dans une virole d'alignement respective sur l'élément de montage de virole est alignée selon une orientation axiale prédéterminée.

2. Appareil d'alignement de fibres optiques selon la revendication 1, l'appareil d'alignement de fibres optiques comprenant en outre un dispositif de maintien de virole (22, 24, 42, 44, 46, 48, 50, 52, 54, 56) recevant l'extrémité d'insertion de fibres optiques de la virole d'alignement, le coin de serrage asymétrique entourant le dispositif de maintien de virole.
